# EUROPEAN PATENT APPLICATION

(11) **EP 4 554 204 A2**
(43) Date of publication of application: **14.05.2025**
(21) Application number: 24211706.7
(22) Date of filing: 08.11.2024
(51) Int. Cl.: H04N 13/00

(54) **VIDEO RENDERING METHOD AND APPARATUS, MEDIUM AND ELECTRONIC DEVICE**

(30) Priority: 09.11.2023 CN 202311493323
(71) Applicant: BEIJING YOUZHUJU NETWORK TECHNOLOGY CO. LTD., Beijing 101299 (CN)
(72) Inventor: CHEN, Yongkang, Beijing, 100028 (CN); CUI, Tengtai, Beijing, 100028 (CN); WANG, Xiaotian, Beijing, 100028 (CN); WANG, Yafeng, Beijing, 100028 (CN); SHEN, Chen, Beijing, 100028 (CN)
(74) Representative: Dentons UK and Middle East LLP

(57) **Abstract**

The present disclosure relates to a video rendering method and apparatus, a medium and an electronic device. The method includes: acquiring a target video, wherein the target video is a video obtained by encoding corresponding images of a first video used as a foreground image and a second video used as a background image; decoding the target video by a video player to obtain a decoding result, wherein the decoding result includes foreground image information and background image information corresponding to a first image in the first video, wherein the foreground image information is composed of image information respectively corresponding to a foreground image layer and an alpha channel layer, and the background image information is composed of image information corresponding to a background image layer; rendering the foreground image information corresponding to the first image and rendering the background image information corresponding to the first image by the video player, so that the foreground image obtained by rendering the foreground image information and the background image obtained by rendering the background image information can be superimposed to form a three-dimensional effect, and the corresponding foreground image and background image can be displayed synchronously.

## Description

### TECHNICAL FIELD

The present disclosure relates to the technical field of electronic information, for example, to a video rendering method and apparatus, a medium and an electronic device.

### BACKGROUND

Naked-eye 3D is a general term for the technology which achieves three-dimensional effects without using external tools such as polarized glasses.

In the related art, two players are usually used to play two videos respectively, so as to realize the three-dimensional effect through the combination of the hierarchical parallax and the picture contents of the two players. However, in such method, these two videos are decoded and rendered independently, which will cause a gradually increased gap between the playback progresses, and then result in the problem that the pictures of the two videos cannot be aligned.

### SUMMARY

This summary is provided to introduce concepts in a brief form, which concepts will be described specifically in the "detailed description" section below. This summary is not intended to identify key features or essential features of the claimed technical solution, nor is it intended to limit the scope of the claimed technical solution.

In a first aspect, the present disclosure provides a video rendering method, including:
acquiring a target video, wherein the target video is a video obtained by encoding corresponding images of a first video used as a foreground image and a second video used as a background image;
decoding the target video by a video player to obtain a decoding result, wherein the decoding result includes foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered; and
rendering the foreground image information corresponding to the first image and rendering the background image information corresponding to the first image by the video player, so that the foreground image obtained by rendering the foreground image information and the background image obtained by rendering the background image information can be superimposed to form a three-dimensional effect

In a second aspect, the present disclosure provides a video rendering apparatus, including:
an acquisition module, configured to acquire a target video, wherein the target video is a video obtained by encoding corresponding images of a first video used as a foreground image and a second video used as a background image;
a decoding module, configured to decode the target video by a video player to obtain a decoding result, wherein the decoding result includes foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered;
a first rendering module, configured to render the foreground image information corresponding to the first image and render the background image information corresponding to the first image by the video player, so that the foreground image obtained by rendering the foreground image information and the background image obtained by rendering the background image information can be superimposed to form a three-dimensional effect.

In a third aspect, the present disclosure provides a computer-readable medium on which a computer program is stored, the computer program, when executed by a processing device, implements steps of the method described in the first aspect.

In a fourth aspect, the present disclosure provides an electronic device, including:
a storage device on which a computer program is stored; and
a processing device configured to execute the computer program in the storage device to realize steps of the method described in the first aspect.

Through the technical solution above, the target video is obtained by encoding the corresponding images of the first video used as the foreground image and the second video used as the background image, so that a frame alignment between images of the first video and the second video is realized on the video source. On this basis, when playing the target video, the target video is decoded by the video player to realize the synchronous decoding of the foreground image and the background image, and the synchronous rendering of the foreground image information and the background image information is also realized by the video player, thereby realizing the synchronous playing of the corresponding background image and foreground image.

Other features and advantages of the present disclosure will be described in detail in the "detailed description" section.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the components and elements are not necessarily drawn to scale. In the accompanying drawings:
Fig. 1 is a flowchart of a video rendering method according to an exemplary embodiment of the present disclosure.
Fig. 2 is a schematic structural diagram of a user interface according to an exemplary embodiment of the present disclosure.
Fig. 3 is a schematic diagram of a process of playing a target video according to an exemplary embodiment of the present disclosure.
Fig. 4 is a schematic logical diagram of correcting a starting playback time according to an exemplary embodiment of the present disclosure.
Fig. 5 is another flowchart of a video rendering method according to an exemplary embodiment of the present disclosure.
Fig. 6 is a block diagram of a video rendering apparatus according to an exemplary embodiment of the present disclosure.
Fig. 7 is a schematic structural diagram of an electronic device according to an exemplary embodiment of the present disclosure.

### DETAILED DESCRIPTION

Embodiments of the present disclosure will be described in more details below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the scope of protection of the present disclosure.

It should be understood that the various steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including/comprising" and its variants are open-ended inclusion, that is, "including/comprising but not limited to". The term "based on" refers to" at least partially based on". The term "one embodiment" refers to "at least one embodiment"; the term "another embodiment" refers to "at least one other embodiment"; the term "some embodiments" refers to "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limitative, and those skilled in the art should understand that unless the context clearly indicates otherwise, they should be understood as "one or more".

Names of messages or information exchanged among multiple devices in the embodiments of the present disclosure are only used for illustrative purposes, and are not used to limit the scope of these messages or information.

It can be understood that prior to using the technical solutions disclosed in various embodiments of the present disclosure, users should be informed of the types, scope of use, use scenarios, etc. of personal information involved in the present disclosure in an appropriate way according to relevant laws and regulations, and authorization from users should be acquired.

For example, in response to receiving the user's active request, prompt information is sent to the user to clearly remind the user that the operation requested by the user will require for obtaining and using the user's personal information. Therefore, the user can independently choose whether to provide personal information to software or hardware such as electronic devices, application programs, servers or storage medium that perform the operation of the technical solution of the present disclosure according to the prompt information.

As an optional but non-limiting implementation, in response to receiving the user's active request, the way to send the prompt information to the user can be, for example, a pop-up window, in which the prompt information can be presented in text. Moreover, the pop-up window can also carry a selection control for the user to choose "agree" or "disagree" to provide personal information to the electronic device.

It can be understood that the above process of notifying and obtaining user's authorization is only schematic, and is not intended to limit the implementation of the present disclosure. Other ways to satisfy relevant laws and regulations can also be applied to the implementation of the present disclosure.

At the same time, it can be understood that the data involved in this technical solution (including but not limited to the data itself, data acquisition or use) should comply with the requirements of corresponding laws, regulations and relevant regulations.

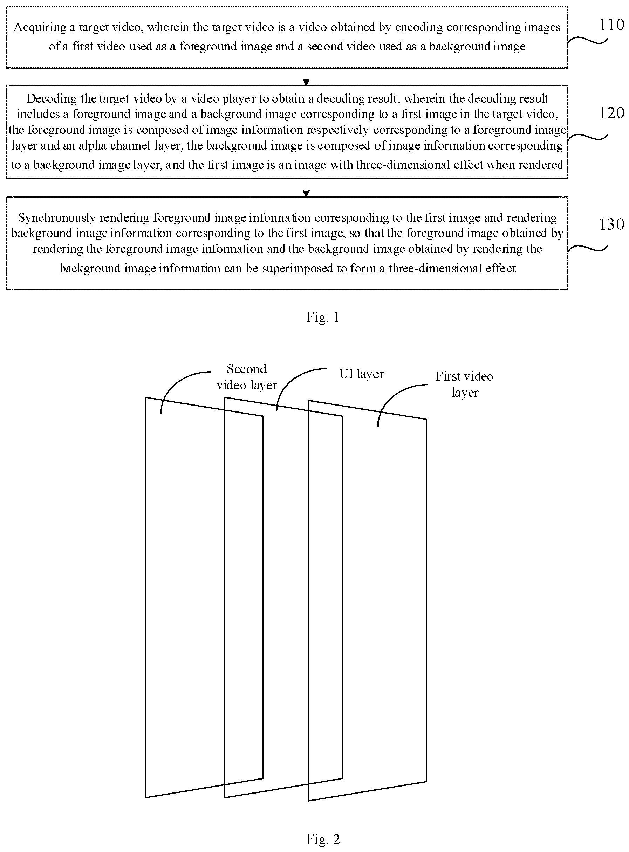

Fig. 1 is a flowchart of a video rendering method according to an exemplary embodiment of the present disclosure. The embodiment of the present disclosure provides a video rendering method, which can be executed by an electronic device, specifically by a video rendering apparatus; the video rendering apparatus can be implemented by software and/or hardware and configured in the electronic device. The electronic device is a device with video playing function, and a video player can be installed in the electronic device, and the video player provides the video playing function. As shown in Fig. 1, the method may include the following steps:
Step 110: acquiring a target video, wherein the target video is a video obtained by encoding corresponding images of a first video used as a foreground image and a second video used as a background image.

Step 120: decoding the target video by a video player to obtain a decoding result, wherein the decoding result includes a foreground image and a background image corresponding to a first image in the target video, the foreground image is composed of image information respectively corresponding to a foreground image layer and an alpha channel layer, the background image is composed of image information corresponding to a background image layer, and the first image is an image with three-dimensional effect when rendered.

Step 130: synchronously rendering the foreground image information corresponding to the first image and rendering the background image information corresponding to the first image, so that the foreground image obtained by rendering the foreground image information and the background image obtained by rendering the background image information can be superimposed to form a three-dimensional effect.

For example, there is at least one frame of image in the first video used as the foreground image, and an image in the second video is used as the background image. The images in the first video and the second video are in one-to-one correspondence. The images in one-to-one correspondence in the first video and the second video are compressed into the same image frame, which is the image in the target video.

It is worth noting that the target video includes a first image and a second image, wherein the first image includes image information respectively corresponding to the foreground image layer, the alpha channel layer and the background image layer, and the first image has a three-dimensional effect when rendered, that is, the first image includes the foreground image and the background image, while the second image only includes the image information corresponding to the background image layer, and the second image has no three-dimensional effect when rendered, that is, the second image only includes the background image. For the specific implementation of generating the target video based on the first video and the second video, reference can be made to the following embodiments, which will not be repeated here.

It is worth noting that the foreground image can include a main object, and the effect of highlighting the main object can be achieved by superimposing the main object on the background image. For example, the main object can be a person or an article, and can also include both of a person and an article, which is not limited in the embodiment of the present disclosure. For example, in the foreground image, other areas except the main object are completely transparent.

It is worth noting that the image information in the foreground image layer is the pixel information of various pixels in the foreground image; and the alpha channel layer is a layer for recording transparency information, that is, the image information corresponding to the alpha channel layer is the transparency information of various pixels in the foreground image. By merging the image information corresponding to the foreground image layer and the image information corresponding to the alpha channel layer, a foreground image with transparency effect can be generated.

It is worth noting that the background image information is the pixel information of various pixels in the background image.

It is worth noting that the video player can include a first video layer and a second video layer, and Fig. 2 is a schematic structural diagram of a user interface (UI) according to an exemplary embodiment of the present disclosure. As shown in Fig. 2, the first video layer is superimposed on the upper layer of the second video layer, and the UI layer is located between the first video layer and the second video layer. The UI layer can be used to set interactive controls, through which users can interact with the electronic device. The foreground image rendered and played by the first video layer is superimposed on the background image rendered and played by the second video layer, thus forming a three-dimensional effect. For example, the interactive controls can be "like" and "forward" and so on.

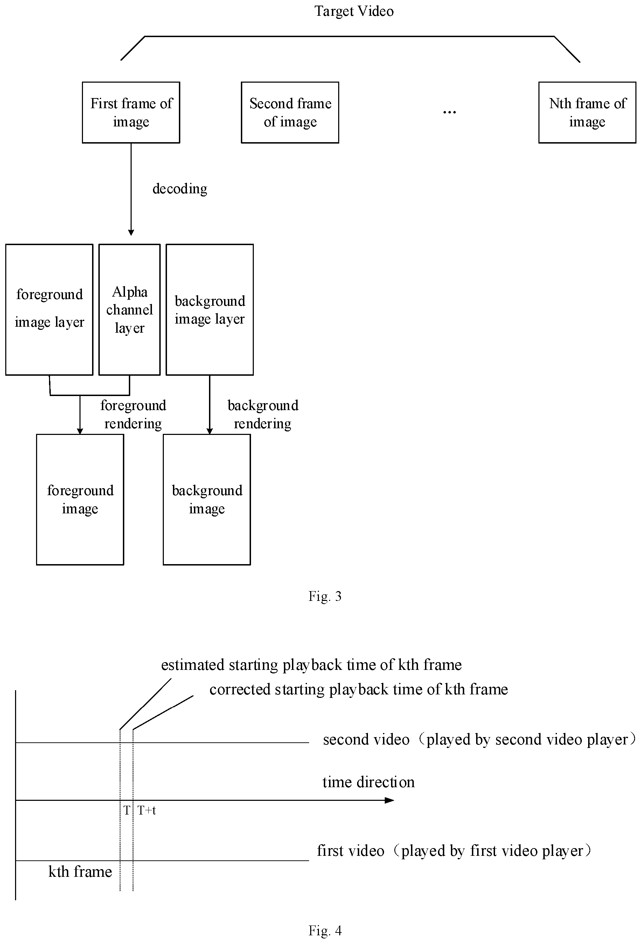

Fig. 3 is a schematic diagram of a process of playing a target video according to an exemplary embodiment of the present disclosure. Reference will be made to the case in which the target video includes N frames of images by way of example, where N is a positive integer greater than 2, and the N frames of images here may include a first image and a second image. The description now is given with reference to decoding and rendering the first frame of image of the target video, by way of example, and the first frame of image is the first image. The image information corresponding to the foreground image layer, the image information corresponding to the alpha channel layer and the image information corresponding to the background image layer are obtained by decoding the first frame of image; the foreground image is obtained by merging and rendering the image information corresponding to the foreground image layer and the image information corresponding to the alpha channel layer; and the background image is obtained by rendering the image information corresponding to the background image layer; in this way, an image with three-dimensional effect of superimposing the foreground image on the background image is displayed on the screen.

By means of the method above, the target video is obtained by encoding the corresponding images of the first video including the foreground image and the second video including the background image, and the frame alignment between images of the first video and the second video is realized on the video source. On this basis, when playing the target video, the target video is decoded by the video player to realize the synchronous decoding of the foreground image and the background image, and the synchronous rendering of the foreground image information and the background image information is also realized by the video player, thereby realizing the synchronous playing of the corresponding background image and foreground image. In this way, it eliminates the problem that the time difference between two videos played by two video players gradually increases with the increase of playback duration under the influences such as network environment and CPU (Central Processing Unit), which problem may result in inconsistent playback progresses of these two videos.

In some embodiments, the steps of rendering the foreground image information corresponding to the first image and rendering the background image information corresponding to the first image by the video player can be implemented in the following ways: merging and rendering the image information respectively corresponding to the foreground image layer and the alpha channel layer corresponding to the first image through the video player, and rendering the background image information corresponding to the first image through the video player.

As can be seen from the above, the foreground image information is composed of image information respectively corresponding to the foreground image layer and the alpha channel layer. Rendering the foreground image information corresponding to the first image refers to rendering the image information respectively corresponding to the foreground image layer and the alpha channel layer, and then the foreground image corresponding to the first image can be obtained; and by rendering the background image information corresponding to the first image, the background image corresponding to the first image can be obtained.

In this way, when rendering the foreground image, the image information respectively corresponding to the foreground image layer and the alpha channel layer are combined and rendered to directly obtain the foreground image, thus solving the problem that some devices cannot directly play the video source with transparent pixels due to not supporting hardware decoding.

In some embodiments, the target video can include a first image and a second image, and correspondingly, the decoding result includes foreground image information and background image information corresponding to the first image, and background image information corresponding to the second image. In this case, the above-mentioned step of acquiring the target video can be implemented in the following ways: acquiring a first video and a second video; encoding target image information corresponding to images belonging to the same time of the first video and the second video to obtain a merged image corresponding to the images, wherein the merged image is the first image or the second image; and generating the target video according to the merged images corresponding to all the images in the first video and the second video.

It is worth noting that in some three-dimensional videos, there may be image frames that don't need foreground images. Therefore, when making a target video, the target image information corresponding to images belonging to the same time of the first video and the second video may include both of foreground image information and background image information, and may also include only background image information.

From the above, it can be seen that the foreground image information is composed of image information respectively corresponding to the foreground image layer and the alpha channel layer, and the background image information is carried by the background image layer. Therefore, in the encoding process, it is necessary to arrange the foreground image layer, the alpha channel layer and the background image layer in a preset order to compress the image information of multiple image layers into one image frame. The preset order here may be the arrangement order of the foreground image layer, the alpha channel layer and the background image layer as shown in Fig. 3.

By means of the method above, a plurality of video sources can be merged into one video source, so that when decoding and rendering, the one and same video player can realize synchronous decoding and rendering of image information corresponding to a plurality of video sources.

In some embodiments, the video rendering method may further include: rendering background image information corresponding to a second image by the video player under the condition that the decoding result only includes a second image layer corresponding to the second image.

For example, the background image information corresponding to the second image is rendered by a second video layer of the video player, so as to realize playing the second image.

In this way, under the condition that the decoding result only includes a second image layer corresponding to the second image, the background image information corresponding to the second image is rendered by the video player, so as to realize completely playing the target video.

In some embodiments, the video rendering method further includes: controlling a second video player to play the second video used as a background image; registering a starting playback time of a first video player playing a first sub-video, wherein the first video at least includes one first sub-video, and the first sub-video is used as a foreground image; correcting the starting playback time in response to a current time reaching a correction time, until pictures of the first video player and the second video player are synchronized, wherein the correction time is earlier than or equal to the starting playback time; in response to the current time reaching the corrected starting playback time, controlling the first video player to start playing the first sub-video, so that the foreground image rendered by the first video player and the background image rendered by the second video player and corresponding to the foreground image can be superimposed to form a three-dimensional effect.

For example, the first video player can be a video player that supports playing images with transparency information in pixels, and the second video player can be a video player for playing a Feed video stream, which is a continuously updated information stream.

It is worth noting that there may be no need for three-dimensional effects at a certain moment, and it is not necessary to play the first video with the first video player at this time. Therefore, for the first video with the same duration as the second video, there may be moments without foreground images, so the first video can be divided into a plurality of first sub-videos by using the moments without foreground images as the dividing points, and it can be understood that each image in the first sub-video can be used as the foreground image.

In a possible implementation, the starting playback time can be a starting playback time of the first sub-video which is estimated in advance. In this case, the correction time needs to be earlier than the starting playback time, because it costs additional time for correction. As a result, the correction of the starting playback time will be performed at a correction time earlier than the starting playback time. By way of example, the correction time may be 150 milliseconds earlier than the starting playback time.

In a possible implementation, a time moment that is earlier than a pre-estimated starting playback time of the first sub-video by a preset time period may also be registered as the starting playback time of the first video player playing the first sub-video, in which case, the correction time can be equal to the starting playback time, because the time for performing correction has been reserved in advance when registering the starting playback time of the first sub-video.

In a possible implementation, the event of the starting playback time can be realized by triggering an event. That is, in practical application, a correction event is registered, and the correction event is triggered when the current time reaches the correction time, then the correction event is executed to realize the playing at the starting playback time.

Fig. 4 is a schematic logical diagram for correcting the starting playback time according to an exemplary embodiment of the present disclosure. Referring to Fig. 4, the first video and the second video may be videos with the equal duration. When the first video and the second video are played by two video players respectively, the ideal situation is that at the time T, the k^{th} frame in the second video and the k^{th} frame in the first video should be played synchronously, so as to realize the synchronous playback of three-dimensional pictures. However, in actual situations, due to influences such as network and equipment, there may be the problem that the k^{th} frame in the second video is played at the time T+t, while the k^{th} frame in the first video is still played at the time T, which causes the pictures to be out of sync and affects the user's viewing experience. Therefore, the k^{th} frame in the first video can be adjusted to be played at the time T+t, so as to realize the synchronous playback of three-dimensional pictures. From the above, it can be seen that the first video is used as a foreground image, and the foreground image can be discontinuous in the playback of the target video. Therefore, the background image played continuously in the first video is matched by adjusting the playback time of the foreground image in the first video.

It is worth noting that in possible implementations, the starting playback time of the first video player playing the first sub-video is just the time when the first video player appears on the electronic screen. Therefore, the starting playback time of the first video player playing the first sub-video can be registered by registering the appearance time of first video player.

With continued reference to the embodiment described in Fig. 4, taking the k^{th} frame as the first frame in the first sub-video by way of example, the starting playback time of the k^{th} frame in the first video can be corrected from the time T to the time T+t. In this way, when the current moment reaches the time T+t, the k^{th} frame is played; and at this time, the k^{th} frame in the second video is also played at the time T+t, thus realizing the synchronous display of the k^{th} frame in the second video and the k^{th} frame in the first video.

By means of the method above, when a naked-eye 3D effect needs to be presented, an appearance time of the first video player, that is, the starting playback time when the first video player plays the first sub-video, is registered in advance, and the appearance time is corrected, so that the delay brought by communication is reduced, and the purpose of synchronously playing the corresponding foreground picture and background picture by the two video players is achieved.

In some embodiments, the above video rendering method may further include: deleting the first video player in response to finishing playing the first sub-video, and registering a starting playback time of the first video player playing a next first sub-video, until finishing displaying all the first sub-videos in the first video.

In this way, the playback of other first sub-videos and the correction of the starting playback time are realized, and the synchronous playback of the corresponding foreground picture and background picture can be achieved to the maximum extent.

In some embodiments, the above step of controlling the first video player to start playing the first sub-video in response to the current time reaching the corrected starting playback time can be implemented in the following ways: determining whether a resource of the first sub-video is normal in response to the current time reaching the corrected starting playback time; and controlling the first video player to start playing the first sub-video in response to determining that the resource of the first sub-video is normal.

For example, "whether the resource is normal" here can be understood as whether the first sub-video is a video resource that can be played normally. For example, if the first sub-video does not include playable foreground images (resources), it indicates that the first sub-video is not normal; on the contrary, if the first sub-video includes playable foreground images, it indicates that the first sub-video is normal.

By means of the method above, the resource of the first sub-video is detected, so that the successful loading of the first sub-video is realized, and that the second processor (described later) and the first video player are prevented from occupying other resources ineffectively due to playing invalid video resources.

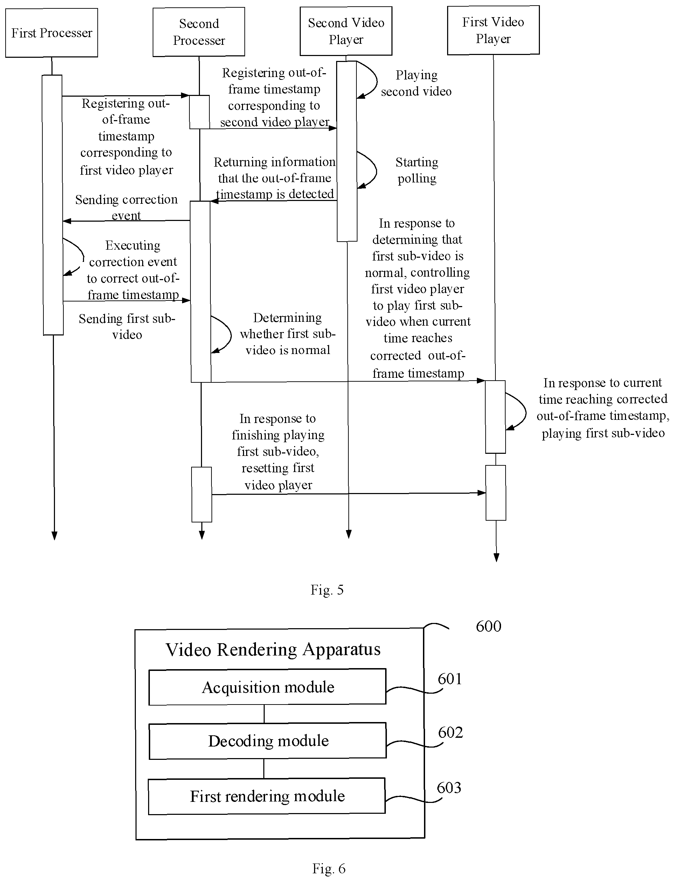

Fig. 5 is another flowchart of a video rendering method according to an exemplary embodiment of the present disclosure. Referring to Fig. 5, an electronic device may include a first processor, a second processor, a first video player and a second video player, wherein the first processor can be understood as a device provided by a first platform and the second processor can be understood as a device provided by a second platform, and the materials provided by the first platform are put on the second platform, so that the first video player and the second video player can display the materials. In this embodiment, the material provided by the first processor is, for example, the first sub-video. The first processor registers the corresponding out-of-frame timestamp with the second processor, and the second processor registers the corresponding out-of-frame timestamp with the second video player, in which the out-of-frame timestamp can be understood as the above-mentioned starting playback time.

The second video player is used for playing a second video, and starting polling to detect whether the current time reaches the starting playback time, and returning information that the out-of-frame timestamp is detected to the second processor when the current time reaches the starting playback time, so that the second processor is prompted to send a correction event to the first processor, and the first processor executes the correction event to correct the out-of-frame timestamp.

The first processor sends a first sub-video to the second processor, so that the second processor can determine whether the first sub-video is normal or not; and if the second processor determines that the first sub-video is normal, the first video player is controlled to play the first sub-video when the current time reaches a corrected out-of-frame timestamp.

The first video player plays the first sub-video when the current time reaches the corrected frame-out timestamp.

When finishing playing the first sub-video, the second processor resets the first video player, in which the "reset" here can be understood as deleting the first video player and registering the starting playback time of the first video player playing the next first sub-video.

In this embodiment, the registered starting playback time is the correction time in the above embodiment.

By means of the above method, when a naked-eye 3D effect needs to be presented, an appearance time of the first video player, that is, the starting playback time when the first video player plays the first sub-video, is registered in advance, and the appearance time is corrected, so that the delay brought by communication is reduced, and the purpose of synchronously playing the corresponding foreground picture and background picture by the two video players is achieved.

Fig. 6 is a block diagram of a video rendering apparatus according to an exemplary embodiment of the present disclosure. Referring to Fig. 6, the video rendering apparatus 600 includes:
an acquisition module 601, configured to acquire a target video, wherein the target video is a video obtained by encoding corresponding images of a first video used as a foreground image and a second video used as a background image;
a decoding module 602, configured to decode the target video by a video player to obtain a decoding result, wherein the decoding result includes foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered; and
a first rendering module 603, configured to render the foreground image information corresponding to the first image and render the background image information corresponding to the first image through the video player, so that the foreground image obtained by rendering the foreground image information and the background image obtained by rendering the background image information can be superimposed to form a three-dimensional effect.

In some embodiments, the first rendering module 603 is configured to merge and render the image information respectively corresponding to the foreground image layer and the alpha channel layer corresponding to the first image through the video player, and render the background image information corresponding to the first image through the video player.

In some embodiments, the decoding result further includes background image information corresponding to a second image in the target video, and the second image is an image without three-dimensional effect when rendered, and the acquisition module 601 includes:
an acquisition submodule, configured to acquire a first video and a second video;
an encoding submodule, configured to encode target image information corresponding to images belonging to a same time of the first video and the second video to obtain a merged image corresponding to the images, wherein the merged image is the first image or the second image; and
a generating submodule, configured to generate the target video according to the merged images corresponding to all of the images in the first video and the second video.

In some embodiments, the video rendering apparatus 600 includes:
a second rendering module, configured to render background image information corresponding to the second image through the video player under the condition that the decoding result only includes the background image information corresponding to the second image.

In some embodiments, the video rendering apparatus 600 further includes:
a first control module, configured to control a second video player to play the second video, wherein the second video is used as a background image;
a registration module, configured to register a starting playback time when a first video player plays a first sub-video, wherein the first video at least includes one first sub-video, and the first sub-video is used as a foreground image;
an adjustment module, configured to correct the starting playback time when a current time reaches a correction time until pictures of the first video player and the second video player are synchronized, wherein the correction time is earlier than or equal to the starting playback time; and
a second control module, configured to control the first video player to start playing the first sub-video when the current time reaches the corrected starting playback time, so that the foreground image rendered by the first video player and the background image rendered by the second video player and corresponding to the foreground image can be superimposed to form a three-dimensional effect.

In some embodiments, the video rendering apparatus 600 further includes:
a deleting module, configured to delete the first video player after finishing playing the first sub-video, and register a starting playback time when the first video player plays a next first sub-video, until finishing playing all the first sub-videos of the first video.

In some embodiments, the second control module includes:
a first determining submodule, configured to determine whether a resource of the first sub-video is normal when the current time reaches the corrected starting playback time; and
a first control submodule, configured to control the first video player to start playing the first sub-video when it is determined that the resource of the first sub-video is normal.

For the implementation of various modules in the video rendering apparatus 600, reference can be made to the above related embodiments, which will not be repeated in this embodiment.

An embodiment of the present disclosure further provides a computer-readable medium on which a computer program is stored, the computer program, when executed by a processing device, realizes the steps of the above method.

An embodiment of the present disclosure further provides an electronic device, including:
a storage device on which a computer program is stored; and
a processing device configured to execute the computer program in the storage device to realize the steps of the above method.

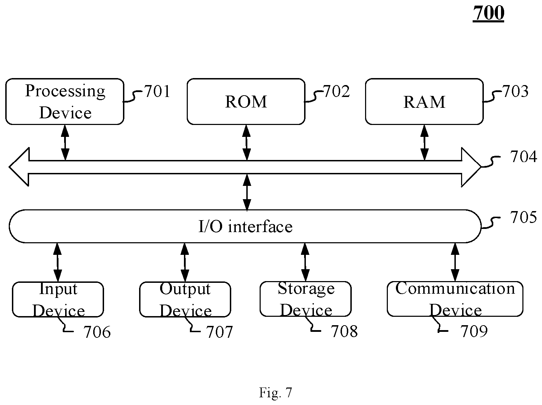

Reference is now made to Fig. 7, which shows a schematic structural diagram of an electronic device 700 suitable for implementing the embodiment of the present disclosure. The terminal devices in the embodiment of the present disclosure may include, but are not limited to, mobile terminals such as mobile phones, notebook computers, digital broadcast receivers, PDA (Personal Digital Assistant), PAD (Tablet Computer), PMP (Portable Multimedia Player) and vehicle-mounted terminals (such as vehicle-mounted navigation terminals); and fixed terminals such as digital TV and desktop computers. The electronic device shown in Fig. 7 is only an example, and should not bring any limitation to the function and application scope of the embodiment of the present disclosure.

As shown in Fig. 7, the electronic device 700 may include a processing device (such as a central processing unit, a graphics processor, etc.) 701, which may perform various appropriate actions and processes according to a program stored in a read-only memory (ROM)702 or a program loaded from a storage device 708 into a random-access memory (RAM) 703. In the RAM 703, various programs and data required for the operation of the electronic device 700 are also stored. The processing device 701, the ROM 702 and the RAM 703 are connected to each other through a bus 704. An input/output (I/O) interface 705 is also connected to the bus 704.

Generally, the following devices can be connected to the I/O interface 705: an input device 706 including, for example, a touch screen, a touch pad, a keyboard, a mouse, a camera, a microphone, an accelerometer, a gyroscope, etc.; an output device 707 including, for example, a liquid crystal display (LCD), a speaker, a vibrator, etc.; a storage device 708 such as a magnetic tape, a hard disk, etc.; and a communication device 709. The communication device 709 may allow the electronic device 700 to perform wireless or wired communication with other devices to exchange data. Although Fig. 7 shows an electronic device 700 with various devices, it should be understood that it is not required to implement or have all the devices as shown. More or fewer devices may alternatively be implemented or provided.

In particular, according to an embodiment of the present disclosure, the process described above with reference to the flowchart can be implemented as a computer software program. For example, an embodiment of the present disclosure includes a computer program product including a computer program carried on a non-transitory computer-readable medium, which contains program codes for executing the method shown in the flowchart. In such an embodiment, the computer program can be downloaded and installed from the network through the communication device 709, or installed from the storage device 708, or installed from the ROM 702. When the computer program is executed by the processing device 701, the above functions defined in the method of the embodiment of the present disclosure are performed.

It should be noted that, the computer-readable medium mentioned above in the present disclosure can be a computer-readable signal medium or a computer-readable storage medium or any combination of the two. The computer-readable storage medium can be, for example, but not limited to, an electrical, magnetic, optical, electromagnetic, infrared, or semiconductor system, apparatus or device, or a combination of any of the above. Examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, which can send, propagate or transmit a program for use by or in connection with an instruction execution system, apparatus or device. The program codes contained in the computer-readable medium can be transmitted by any suitable medium, including but not limited to: electrical wires, optical cables, RF (radio frequency) and the like, or any suitable combination of the above.

In some embodiments, the client and the server can communicate by using any currently known or future developed network protocol such as HTTP (HyperText Transfer Protocol), and can be interconnected with digital data communication in any form or medium (for example, communication network). Examples of communication networks include a local area network ("LAN"), a wide area network ("WAN"), the Internet (for example, the Internet) and end-to-end networks (for example, ad hoc end-to-end networks), as well as any currently known or future developed networks.

The computer-readable medium may be included in the electronic device; or it can exist alone without being assembled into the electronic device.

The computer-readable medium carries one or more programs which, when executed by the electronic device, cause the electronic device to: acquire a target video, wherein the target video is a video obtained by encoding corresponding images of a first video used as a foreground image and a second video used as a background image; decode the target video by a video player to obtain a decoding result, wherein the decoding result includes foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered; render the foreground image information corresponding to the first image and render the background image information corresponding to the first image by the video player, so that the foreground image obtained by rendering the foreground image information and the background image obtained by rendering the background image information can be superimposed to form a three-dimensional effect, and a first video layer is located above a second video layer.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program code can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architecture, functions and operations of possible implementations of systems, methods and computer program products according to various embodiments of the present disclosure. In this regard, each block in the flowchart or block diagram may represent a module, a program segment, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The modules described in the embodiment of the present disclosure can be realized by software or hardware. Among them, the name of the module does not constitute the limitation of the module itself in some cases.

The functions described above herein may be at least partially performed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

The above description is only the preferred embodiments of the present disclosure and the explanation of the applied technical principles. It should be understood by those skilled in the art that the disclosure scope involved in the present disclosure is not limited to the technical solution formed by the specific combination of the above technical features, but also covers other technical solutions formed by any combination of the above technical features or their equivalent features without departing from the above disclosure concept. For example, the above features can be replaced with (but not limited to) technical features with similar functions disclosed in the present disclosure.

Furthermore, although the operations are depicted in a particular order, this should not be understood as requiring that these operations be performed in the particular order as shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims. With regard to the device in the above embodiment, the specific way in which each module performs operations has been described in detail in the embodiment of the method, and will not be described in detail here.

## Claims

1. A video rendering method, comprising:
acquiring a target video, wherein the target video is a video obtained by encoding corresponding images of a first video used as a foreground image and a second video used as a background image;
decoding the target video by a video player to obtain a decoding result, wherein the decoding result comprises foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered; and
rendering the foreground image information corresponding to the first image and rendering the background image information corresponding to the first image by the video player, so that the foreground image obtained by rendering the foreground image information and the background image obtained by rendering the background image information can be superimposed to form a three-dimensional effect.

2. The method according to claim 1, wherein the rendering the foreground image information corresponding to the first image and rendering the background image information corresponding to the first image by the video player comprises:
merging and rendering image information respectively corresponding to the foreground image layer and the alpha channel layer corresponding to the first image by the video player, and rendering the background image information corresponding to the first image by the video player.

3. The method according to claim 1, wherein the decoding result further comprises background image information corresponding to a second image in the target video, wherein the second image is an image without a three-dimensional effect when rendered, and
the acquiring a target video comprises:
acquiring the first video and the second video;
encoding target image information corresponding to images belonging to a same time of the first video and the second video to obtain a merged image corresponding to the images, wherein the merged image is the first image or the second image; and
generating the target video according to the merged images corresponding to all the images in the first vide and the second video.

4. The method according to claim 3, further comprising:
in response to the decoding result only comprising the background image information corresponding to the second image, rendering the background image information corresponding to the second image by the video player.

5. The method according to claim 1, further comprising:
controlling a second video player to play the second video used as the background image;
registering a starting playback time of a first video player playing a first sub-video, wherein the first video at least comprises one first sub-video, and the first sub-video is used as the foreground image;
in response to a current time reaching a correction time, correcting the starting playback time until synchronizing pictures of the first video player and the second video player, wherein the correction time is earlier than or equal to the starting playback time; and
in response to the current time reaching the corrected starting playback time, controlling the first video player to start playing the first sub-video, so that the foreground image rendered by the first video player and the background image rendered by the second video player and corresponding to the foreground image can be superimposed to form a three-dimensional effect.

6. The method according to claim 5, further comprising:
in response to finishing playing the first sub-video, deleting the first video player, and registering a starting playback time of the first video player playing a next first sub-video, until finishing playing all the first sub-videos of the first video.

7. The method according to claim 5, wherein in response to the current time reaching the corrected starting
playback time, controlling the first video player to start playing the first sub-video, comprising:
in response to the current time reaching the corrected starting playback time, determining whether a resource of the first sub-video is normal; and
in response to determining that the resource of the first sub-video is normal, controlling the first video player
to start playing the first sub-video.

8. A video rendering apparatus, comprising:
an acquisition module, configured to acquire a target video, wherein the target video is a video obtained by encoding corresponding images of a first video used as a foreground image and a second video used as a background image;
a decoding module, configured to decode the target video by a video player to obtain a decoding result, wherein the decoding result comprises foreground image information and background image information corresponding to a first image in the target video, wherein the foreground image information is composed of image information respectively corresponding to a foreground image layer and an alpha channel layer, and the background image information is composed of image information corresponding to a background image layer, and the first image is an image with a three-dimensional effect when rendered; and
a first rendering module, configured to render the foreground image information corresponding to the first image and render the background image information corresponding to the first image by the video player, so that the foreground image obtained by rendering the foreground image information and the background image obtained by rendering the background image information can be superimposed to form a three-dimensional effect.

9. A computer-readable medium on which a computer program is stored, wherein the computer program, when executed by a processing device, realizes the video rendering method according to any one of claims 1-7.

10. An electronic device, comprising:
a storage device on which a computer program is stored; and
a processing device configured to execute the computer program in the storage device to realize the video rendering method according to any one of claims 1-7.
